# EUROPEAN PATENT SPECIFICATION

(11) **EP 2 310 325 B1**
(45) Date of publication and mention of the grant of the patent: **02.09.2015**
(21) Application number: 09788233.6
(22) Date of filing: 16.07.2009
(51) Int. Cl.: C02F 1/02, C02F 1/44, C02F 1/04, C02F 103/08

(54) **METHOD AND SYSTEM FOR SUPERCRITICAL REMOVAL OF AN INORGANIC COMPOUND**
VERFAHREN UND SYSTEM ZUR ÜBERKRITISCHEN ENTFERNUNG EINER ANORGANISCHEN VERBINDUNG
PROCÉDÉ ET SYSTÈME D' ÉLIMINATION EN CONDITIONS SUPERCRITIQUES D' UN COMPOSÉ INORGANIQUE

(30) Priority: 21.07.2008 NL 1035729
(43) Date of publication of application: 20.04.2011
(73) Proprietor: Stichting Wetsus Centre of Excellence for Sustainable Water Technology, 8934 CJ Leeuwarden (NL)
(72) Inventor: METZ, Sybrandus Jacob, 8900 CC Leeuwarden (NL); LEUSBROCK, Ingo, 8934 CJ Leeuwarden (NL)
(74) Representative: Verdijck, Gerardus
(86) International application number: PCT/NL2009/050439
(87) International publication number: WO 2010/011136

(56) References cited:
- WO-A-2004/101446
- CN-A- 1 363 522
- CN-A- 1 730 414
- DE-A1- 19 910 211
- DE-A1-102005 037 469
- FR-A- 2 871 794
- JP-A- 2003 326 151
- JP-A- 2004 033 910
- US-A- 2 520 186
- US-A- 3 361 648
- US-A- 4 543 190
- US-A- 4 822 497
- US-A- 5 118 447
- Fred J Armellini ET AL: "Solubility of sodium chloride and sulfate in sub-and supercritical water vapor from 450-550°C and loo-250 bar", Fluid Phase Equilibria Elsevier Science Publishers B.V, 1 January 1993 (1993-01-01), pages 123-142, XP055125864, [retrieved on 2014-06-30]
- HIGASHI H ET AL: "Measurement and correlation for solubilities of alkali metal chlorides in water vapor at high temperature and pressure", FLUID PHASE EQUILIBRIA, ELSEVIER, AMSTERDAM, NL, vol. 228-229, 1 February 2005 (2005-02-01) , pages 547-551, XP004870828, ISSN: 0378-3812, DOI: 10.1016/J.FLUID.2004.07.019

## Description

The present invention relates to a method for supercritical removal of an inorganic compound from a fluid. More specifically, the invention relates to desalination of water, like sea water and waste water. The resulting desalinated water may be used as drinking water.

Several methods are known to desalinate water and to remove inorganic compounds.

US-A-5 118 447 discloses a method for denitrification of nitrates and nitrites from an aqueous system. The document US4822497 discloses a method for supercritical solids separation as known from the prior art. According to 1998 IDA Worldwide Desalting Plants, Inventory Report No. 15, 1998, Wangnick Consulting GmbH, in 1998 a total capacity of 22.58 10⁶ m³ d⁻¹ was available worldwide. Of this total capacity, the Multi-Stage-Flash (MSF) and Reverse Osmosis (RO) techniques were responsible for 44.4% and 39.1% of this total world capacity, respectively. Other techniques include Multi-Effect-Distillation (MED), Vapor Compression (VC) and Electro Dialysis (ED). Other (less efficient) technologies for removal of inorganic compounds include ultra filtration, nano-filtration, solar desalination, membrane distillation, freezing desalination and capacitive de-ionisation. These last techniques are mainly applied in new developing applications and do not yet significantly contribute to the worldwide capacity. Also, technologies like Vapor Compression and Electro Dialysis are mainly to be found in relatively small scaled plants and decentral locations.

A MSF distillation plant uses flash chambers with different pressure levels. The pressurized water, like sea water, flows through pipes that are located in opposite sections of the chambers as where heat is exchanged with the vapor. A steam heater is used for further heating the water in these pipes, using steam or fossil fuels. The vapor condenses and is collected in trays as the primary process output. The non-evaporated water has a higher salt concentration and is removed from the system, normally by dilution into the sea. These plants show relatively high energy consumption, due to the evaporation process. Another drawback is that some plants show an efficiency of about 50% of the feed stream that is transferred to the primary output stream. The recovery of water from a feed stream is mainly limited by the scaling of salts on process equipment. Therefore, anti-scalants are used which delay the crystallization process. However, the recovery of water is limited by the scaling. The remaining of the feed stream is often diluted into the sea, which may result in environmental problems.

A different approach is the multi-effect distillation (MED) that works similar to the MSF using chambers with different pressures. Energy of the vapor-phase is re-used in the process, although this often leads to a higher scaling ratio and a higher corrosion rate for the heat transfer areas. Another approach is the use of Vapor-Compression (VC) for the production of fresh water that is similar to MED. In VC the vapor-phase is re-used to improve the energy efficiency.

The second most important existing method to desalinate a fluid like sea water is the use of Reverse Osmosis (RO). The system pressure is used to separate salt fractions from the incoming water stream. The salt ions do not pass the membranes, while the water molecules do pass. Examples of materials used for membranes are cellulose-acetate, polyamides and other polymers. A major drawback of the use of membranes is scaling and bio-fouling. Therefore, anti-scaling agents are used. In Electro Dialysis (ED), an electrical field is used to remove salt from a fluid. By placing membranes between the anode and the cathode, that are selective for either the anions or the cations, fresh water is produced. As the required amount of energy is proportional to the amount of salt removed from the fluid, the applicability of ED is mainly limited to brackish water desalination.

The present invention has for its object, to obviate, at least partially, one or more of the above mentioned drawbacks to result in a more efficient removal of inorganic compounds, such as in a desalination process.

Therefore, the present invention provides a method for supercritical removal of an inorganic compound according to claim 1.
When increasing temperature and pressure, such that the vapor-liquid equilibrium curve is followed, the liquid becomes less dense due to the temperature increase, and the vapor-phase becomes denser due to the pressure increase. Therefore, these different phases become less distinguishable in case temperature and pressure are even further increased. At the conditions at which the density of the vapor and the liquid phases is equal, only one phase can be seen. These conditions are called the critical point of a fluid and the phase is referred to as the critical phase. For water the critical temperature is 647 K (374 °C) and the critical pressure is 22.1 MPa (221 bar). The properties of the (super)critical phase are a mixture of the properties of the liquid and vapor phases. At supercritical conditions, so conditions above the critical conditions, also the relative dielectrical constant changes dramatically. The value for this constant drops from about 80 at ambient conditions to below 20 in the supercritical phase. This constant is an indication for the ability to solvate ions in a fluid. This means that water loses its ability to solve compounds like salt and salt fractions in the supercritical phase, while at ambient conditions water is an excellent solvent for salts. On the other hand the solvability of organic compounds in water increases under supercritical conditions. In a preferred embodiment the fluid is sea water or waste water.

According to the invention the inorganic fraction comprises a salt fraction. The decrease in solubility of salts at supercritical conditions leads to the desalination of fluids, like sea water, under these conditions. The salt fractions will precipitate and form crystals that can be separated from the fluid via separation methods that are known to the skilled person. Desalination of a fluid at supercritical conditions can be applied even to incoming fluids with high salt concentrations while still being capable of performing the desalination in an efficient manner. In addition, a high salt concentration is even positive for the desalination as it increases the degree of supersaturation and, therefore, the driving force for the precipitation step. In preferred embodiments according to the present invention the fluid comprises sea water and/or waste water with a high salt concentration from for example waste water treatment plants and galvanic industry. Also, it is possible to send the output, or waste streams, of evaporation units and reverse osmosis (RO) units with salt concentrations of about up to 6 % as feed stream to the desalination operation. Especially the retentate flow of the RO unit can be used efficiently as it is already at a high pressure of about 60 bar.

In a preferred embodiment according to the present invention the temperature of the fluid at the separation step is above 458 °C to ensure a chloride concentration below 200 ppm.

By processing the fluid at a temperature above 458 °C (731 K) a chloride concentration below 200 ppm can be realized. This concentration is one of the relevant limits drinking water. An output flow with a chloride concentration below this value may be used as drinking water. An alternative solution to prevent these relatively harsh conditions would be to perform a post-treatment step. However, this requires additional steps and equipment. As an alternative to the temperature, the pressure of the fluid at the separation step can be chosen to be above 221 bar to ensure a chloride concentration below 200 ppm. Also, a combination of temperature and pressure can be used to ensure the desired chloride concentration.

In another preferred embodiment according to the present invention the fluid is pretreated in a reverse osmosis process step.

By using the output flow, like the concentrated brine, of the RO step as input flow for the SuperCritical Desalination step an efficient operation can be achieved. This is achieved as most of RO plants are equipped with a pressure recovery unit that with relatively small modifications can be adapted to the needs of a SCD plant. In addition, the fluid is already at a relatively high pressure of about 60 bar after the RO step as compared to other combinations. In an alternative embodiment according to the present invention the fluid is pretreated in a Multi-Stage-Flash (MSF) distillation unit. Such a combination enables the use of a combined steam production unit. By using a pretreatment step, like RO and/or MSF, the SCD benefits on the increased salt concentrations of the incoming fluid.

In a preferred embodiment according to the present invention the energy is recovered from the fluid after the separation step.

Through the recovering of energy after the separation step an energy-efficient operation can be realized. Possibilities to recover energy include the implementation of a turbocharger wherein the high pressure pump and the turbine are on one shaft. The feed stream runs through the pump, is pressurized and enters the membrane vessel in case of a RO-plant. The permeate and concentrate streams leave the vessel where after the concentrate flow is expanded over the turbine and the energy is recovered. Another possibility includes a Pelton wheel wherein the stream is expanded via a nozzle that is directed towards the blades of the Pelton wheel that is installed on the same shaft as the high pressure pump. A further possibility includes a work exchanger consisting of a system of valves and pistons allowing transfer of pressure from the system output to the feed water stream.

According to the present invention the separation step is divided in different separation sub-steps to separate inorganic compounds, for example different salt fractions, at different supercritical conditions.

By dividing the supercritical (desalination) operation in sub-steps with different supercritical conditions it is possible to desalinate specific (salt) components in a separate substep. This may improve the quality of the resulting product, for example drinking water. Also, it is possible to separate the different salt fractions of the incoming fluid. This enables a more efficient post-treatment of such concentrations which may be focused on specific applications for these different salt fractions. This may improve the overall efficiency of the separation process.

In a further preferred embodiment according to the present invention the energy for bringing the fluid at supercritical conditions is provided by a fuel cell or a power plant.

Bringing a fluid to be desalinated at supercritical conditions requires a specific amount of energy. To enable an efficient overall operation of the desalination process it may be beneficial to combine the desalination process with a fuel cell or a power plant that have a relatively large amount of energy available as by-product. This combination contributes to an efficient operation of the desalination process. In addition, also the efficiency of the fuel cell or operation of the power plant can be improved.

The invention can be applied in a system and in a power plant comprising such system. In a power plant water is heated to steam. This high pressure steam is expanded over a turbine thereby generating energy. The low pressure steam after the turbine is normally cooled using a heat exchanger with for example surface water and the water is recycled. According to the invention the water in a power plant is heated to supercritical conditions. Next, the inorganic compounds like salts are separated. Using the turbine energy is generated. Preferably, in stead of recycling the water it is used for example for drinking water.

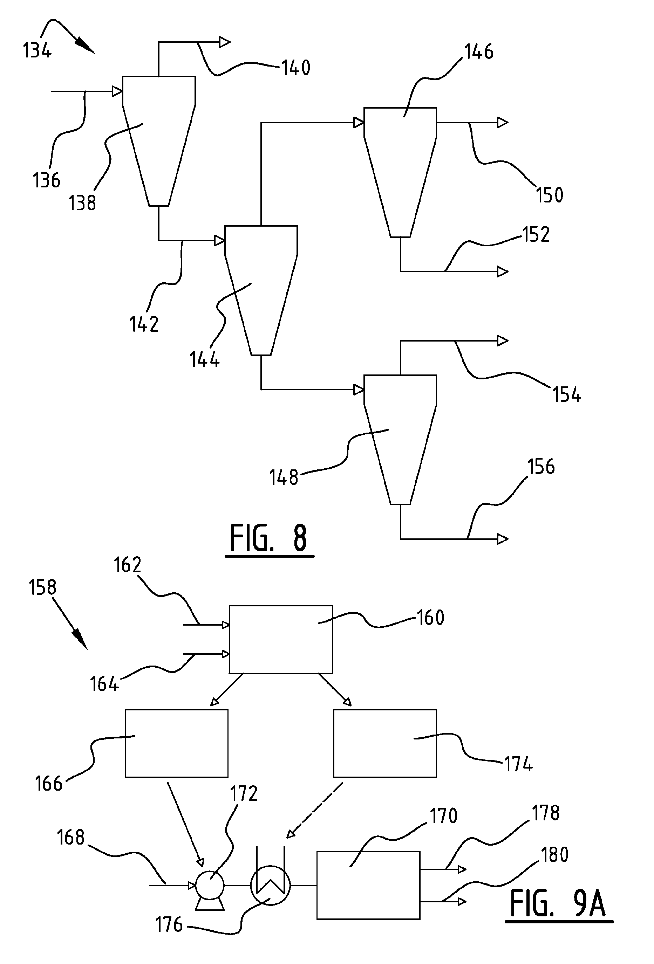

Further advantages, features and details of the invention are elucidated on the basis of figure 8. In the following reference is made to the accompagnying drawings, in which:
- figure 1 shows a Multi-Stage-Flash distillation;
- figure 2 shows a schematic overview of a reverse osmosis plant;
- figure 3 shows density and relative dielectrical constant of water as function of temperature;
- figure 4 shows a schematic overview of an experimental set-up;
- figure 5 shows the solubility of salt fractions;
- figure 6 shows the supercritical desalination basis scheme;
- figure 7A shows a schematic overview of an RO-plant;
- figure 7B shows a schematic overview of a combination of a RO and SCD plant;
- figure 8 shows a schematic overview of crystallization using SCD in sub-steps;
- figure 9A shows a schematic overview of a combination of a fuel cell with SCD;
- figure 9B shows a schematic overview of a combination of a fuel cell with RO and SCD; and
- figure 10 shows a schematic overview of a combination of a power plant with SCD.

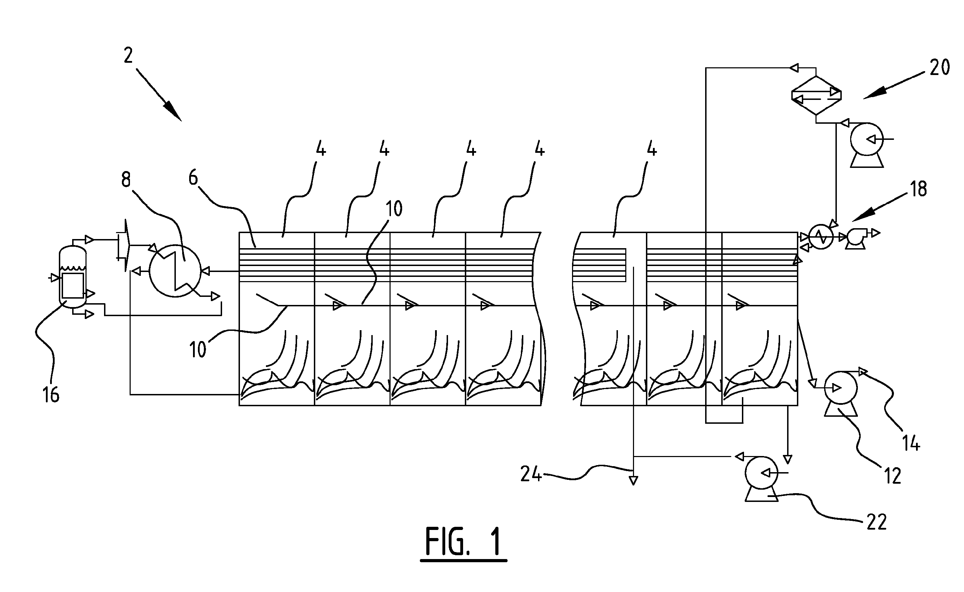

A Multi-Stage-Flash-Distillation plant 2 (figure 1) comprises a number of flash chambers 4. These chambers 4 operate at different pressure levels. The fluid, brackish or sea water, flows through pipes 6 in the upper section of the chambers 4 to exchange heat with the rising vapor. The water in pipes 6 is heated in a steam heater 8. The high temperature of the water in combination with a pressure relief in the different chambers 4 results in a flashing of the liquid phase. The vapor rising from the lower sections of chambers 4 condenses on pipes 6 in the upper section. The condensate is collected in collection trays 10. With pump 12 the condensate is pumped out of the system 2 as output flow 14. In the illustrated system 2 the steam heater 8 is provided with steam from a primary steam source 16. The incoming fluid flows to a vacuum system 18 and is pretreated in pretreatment system 20. The non-evaporated water is concentrated in relation to the salt concentration and is being pumped out of the system via pump 22. Often this output flow 24 is diluted into the sea.

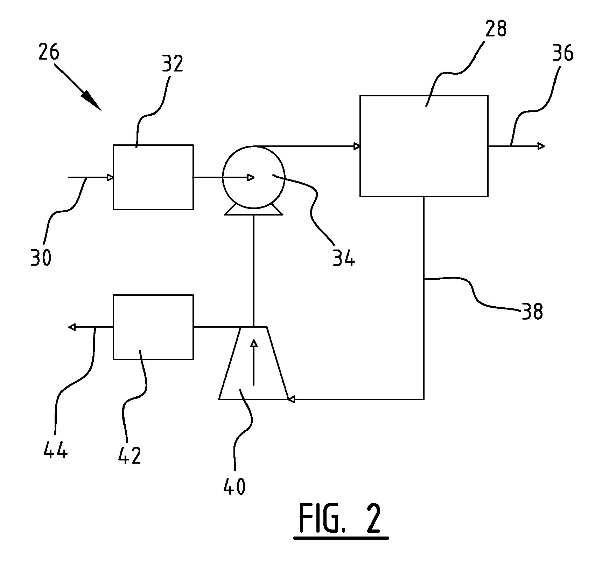

A reverse osmosis plant 26 (figure 2) comprises a reverse osmosis unit 28. The input flow 30 comprises of brackish and/or sea water that is pretreated in pretreatment unit 32. The flow is pumped with pump 34 to the RO-unit 28. The permeate 36 is the output of the system 26. The concentrate 38 is fed through a turbine 40 towards post-treatment unit 42. This results in an output flow 44. Pretreatment steps 32 may include the removal of biological compounds to minimize bio-fouling, the removal of bicarbonates by acid dozing, dozing anti-scaling agents and solid removal. The RO unit 28 is operated at about 50-80 bars for sea water desalination and about 10-25 bars for brackish water treatments. The membranes are commonly made of cellulose acetate, polyamides and other polymers. The membranes in unit 28 may have different combinations of composition, for example hollow-fiber and spiral-wound.

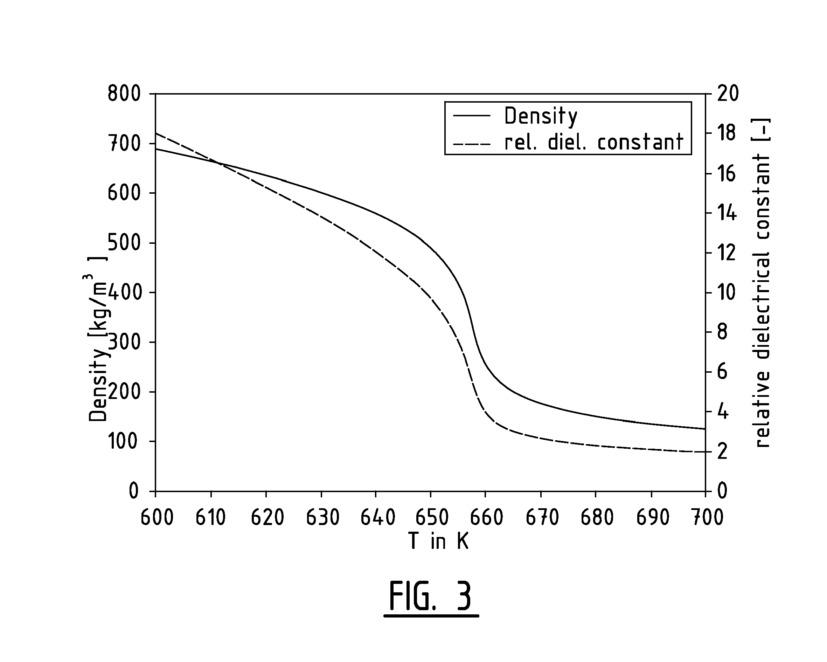

The density and relative dielectrical constant of water (figure 3) show a significant drop in value around 650-670 K. As mentioned this feature is important for the supercritical desalination of a liquid like sea water.

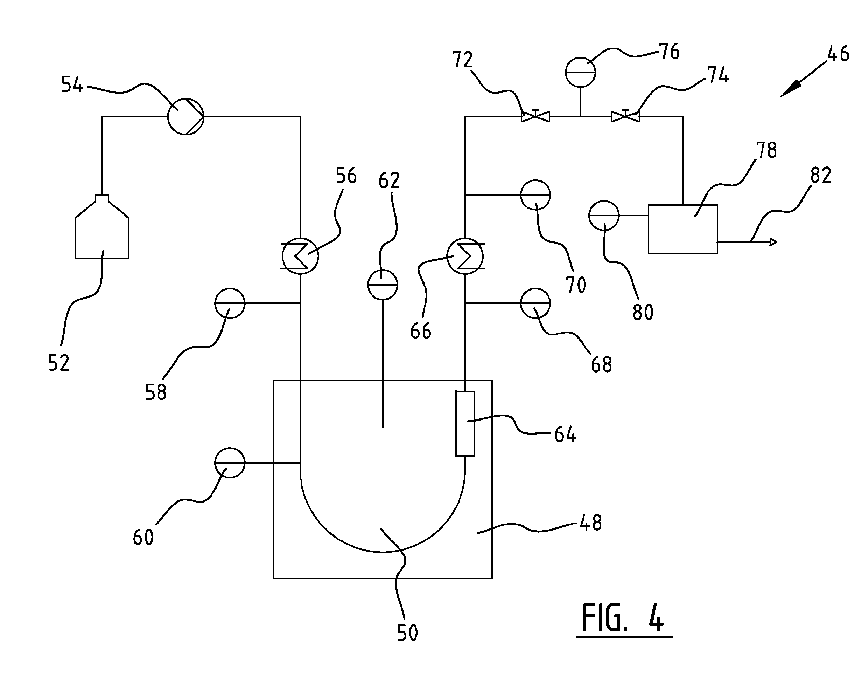

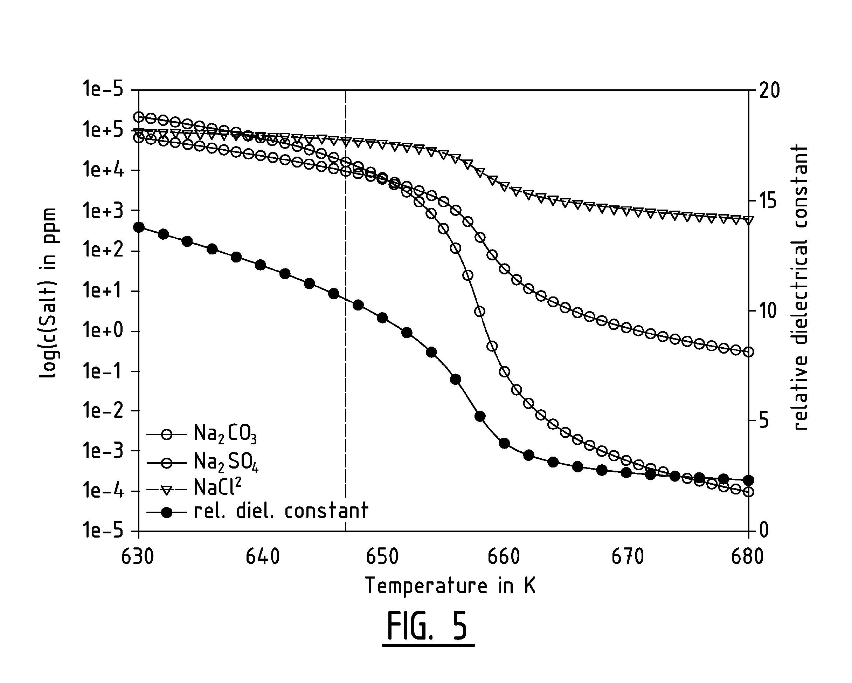

To measure the effect of supercritical conditions on water with different salt fractions an experimental set-up 46 is used (figure 4). System 46 comprises of an oven 48 with salt column 50. The liquid is supplied from a supply-tank 52 and pumped via pump 54 to pre-heater 56. The pre-heater temperature is measured with sensor 58 and the fluid temperature at the entrance side of oven 48 is measured with sensor 60. The temperature inside oven 48 is measured with sensor 62. The liquid is filtered with filter 64 and fed to cooler 66. The effect of cooler 66 is measured by sensors 68 and 70. Two valves, one acting as backpressure regulator 72 and one acting as a relief valve 74 are incorporated in system 46. Temperature of the fluid between valves 72, 74 is measured with sensor 76. The liquid is analyzed by sampling unit 78 in which the temperature is measured with sensor 80. Finally, the liquid is sent to output 82. The oven temperature is selected in the range of 350-450 °C. For the experiments to conduct measurements of water containing a specific salt fraction, the clean water is fed through the salt column 50 with the specific salt fraction or salt fractions to be analyzed in sampling unit 78. The analyses in unit 78 take place at ambient temperature and pressure. The analyses are conducted by conductometry and ICP. The ICP samples are taken when the system is in equilibrium to have a reference for the conductometry measurements. To have an indication for corrosion, analyses are performed of inorganic compounds like Fe, Ni and Cr ions. Pump 54 pressurizes the liquid up to 400 bars with a mass flow of up to 10 g/min. In addition two safety valves (not shown) are included, one just before and one after the U-shape pipe in the oven. The cooler 66 comprises a radiator coil hanging in mid-air. Parts of plant 46 that are in direct contact with the salt and the salt containing water flow are made of corrosion resistant material like a nickel-based alloy (Hastelloy C-276 or Inconel 600). Other parts are made of stainless steal. Measured solubilities of the salts as function of temperature are shown in comparison with the dielectrical constant (figure 5). In plant 46 temperature and pressure are varied to study the solubility of different salt fractions in water. Other aspects that were studied relate to the mass flow and residence time to study the effect of interaction of salt fractions and (residence) time to the equilibrium. The particle diameter mainly relates to surface effects. Also compositions of the outlet stream were analyzed to study the effect of corrosion of the system 46. From the results it is shown that desalination of for example sea water at supercritical conditions is possible and has several advantages. Also, it is shown that different salt fractions have different conditions at which precipitation is maximal. This enables performing the desalination in sub-steps to allow for desalinating a specific fraction from the fluid.

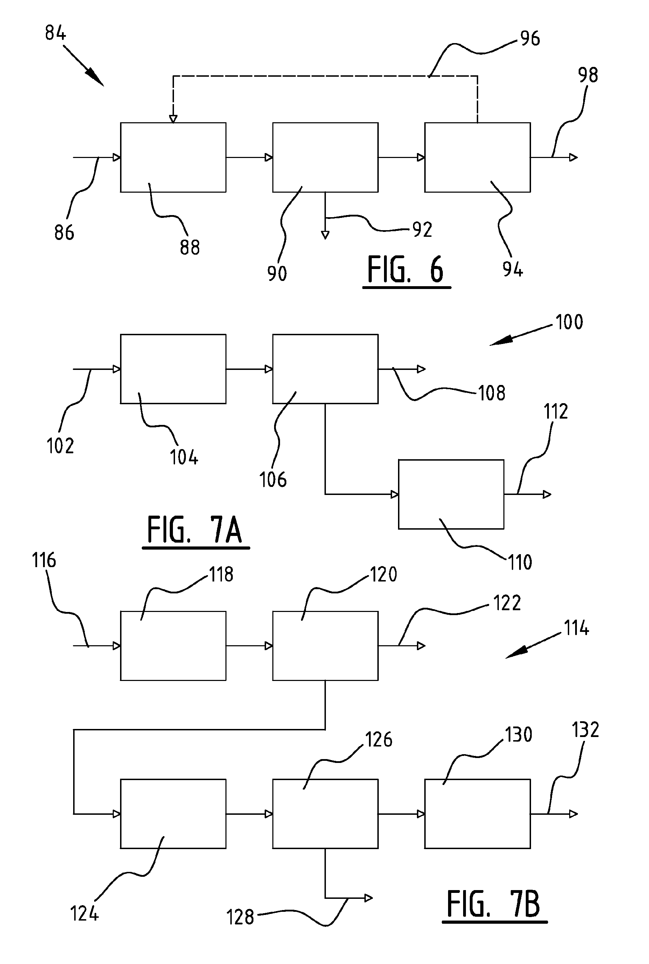

The desalination system 84 (figure 6) has an input flow 86 that is brought at the desired temperature of above 647 K and pressure of above 22.1 MPa in energy input unit 88. The fluid that is brought at these conditions has a concentration of 3-10 wt% and is fed to the separation unit 90. Separation unit 90 separates the salt fractions from the liquid. The separated salt fractions are sent to output 92. The desalinated water at conditions of a temperature of 647 K and a pressure of above 22.1 MPa is fed to the energy recovery unit 94. The recovered energy is sent via connection 96 to the pretreatment unit 88. The desalinated water stream at ambient conditions is sent to output 98.

A schematic RO system 100 (figure 7A) has an input 102 for supply of a fluid at ambient conditions to system 100. The pretreatment unit 104 brings the fluid at a pressure of about 6 MPa and sends the fluid to the RO unit 106. The product, like drinking water, is sent to output 108 at ambient conditions. The RO retentate has equal conditions as were applied to the RO unit 106. This flow is sent to the energy recovery unit 110 after which a waste stream results at ambient conditions that is sent to output 112.

A combination of RO and SCD into one system 114 (figure 7B) results in an efficient system as mentioned above. System 114 according to the invention has an input flow 116 that is pretreated and brought into pretreatment unit 118 and brought at a temperature of 293 K and a pressure of about 6 MPa (60 bar). Next, the flow is fed to the RO unit 120. The RO output 122 comprises of clean water at a temperature of 293 K and a pressure of 1 bar. The retentate has a temperature of about 293 K and a pressure of 6 MPa and is fed to conditioning unit 124 to bring this flow at a temperature of above 647 K and a pressure of above 22.1 MPa. This flow is sent to the SCD unit 126 in which the salt fractions are separated from the water. Salts are sent to output 128 at about ambient conditions. The remaining fluid at the supercritical conditions is sent to the energy recovery unit 130 in which energy is recovered that may be used for the energy input steps where after an output flow 132 results of about ambient conditions.

According to the invention the method has several sub-steps in a fractionized desalination system 134 (figure 8). An input flow 136 containing different salt fractions is fed to a pretreatment unit 138. This unit 138 may be a RO unit. A water flow is sent to output 140 of unit 138. The remaining concentrated fluid is sent to the first SCD unit 144 that is operated at a temperature of 650 K and a pressure of 25 MPa. Unit 144 has two output flows. One output flow is sent to SCD unit 146 where the second step 2A on the first fraction is performed at conditions of 700 K and 25 MPa. The other output flow of the first step 144 is sent to another unit SCD unit 148 for step 2B that operates at a temperature of 640 K and a pressure of 25 MPa. The two main output flows of unit 146 are a water flow at output 150 and a salt fraction (NaCl) at output 152. The two main output flows of unit 148 comprise for output 154 mainly Na₂SO₄ and, in addition, Na₂CO₃ and H₂O. The second main output comprises the fraction Na₂CO₃. In unit 144 the incoming fluid is separated in water with main fraction NaCl and small quantities of Na₂CO₃ and Na₂SO₄ and the other flow towards unit 148 comprising water with fractions Na₂CO₃ and Na₂SO₄. In step 2A in unit 146 pure water is produced. The remaining is fed as a concentrated salt water flow as output 152.

SCD system 158 according to the invention is provided with energy from a fuel cell 160 (figure 9A). Fuel cell 160 has its inputs 162, 164 respectively natural gas or biogas and CO₂ and O₂. Depending on the type of fuel cell it is operated at around 600 °C or 900 °C. The electricity 166 as of output of fuel cell 160 is fed via feed stream 168 to the SCD unit 170. This input flow 168 to the SCD unit 170 is brought at a temperature of about 303 K and 25 MPa in unit 172. Next, this liquid flow is brought at SCD conditions of about 700 K and 25 MPa using heat or steam 174 in exchanger 176. SCD unit 170 has a product output 178 of about 700 K and 25 MPa and a concentrated output of about ambient conditions. The energy of output flow 178 may be recovered.

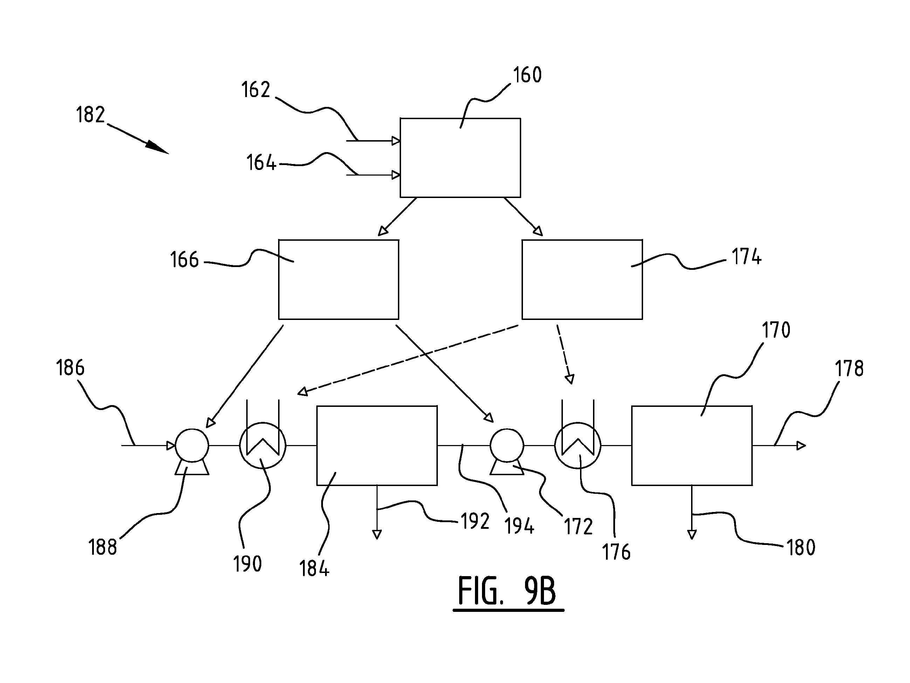

In an alternative embodiment 182 (figure 9B) system 158 is combined with an RO unit 184. The input flow 186 is brought from ambient conditions using energy 166 by pressure unit 188 at a pressure of 6 MPa. Next, the flow is increased in temperature to about 303 K by heater 190 using heat or steam 174. The RO permeate is sent to output 192 at ambient pressure and a temperature of about 303 K. The RO concentrate is sent with a temperature of about 303 K and a pressure of about 6 MPa, towards the SCD unit.

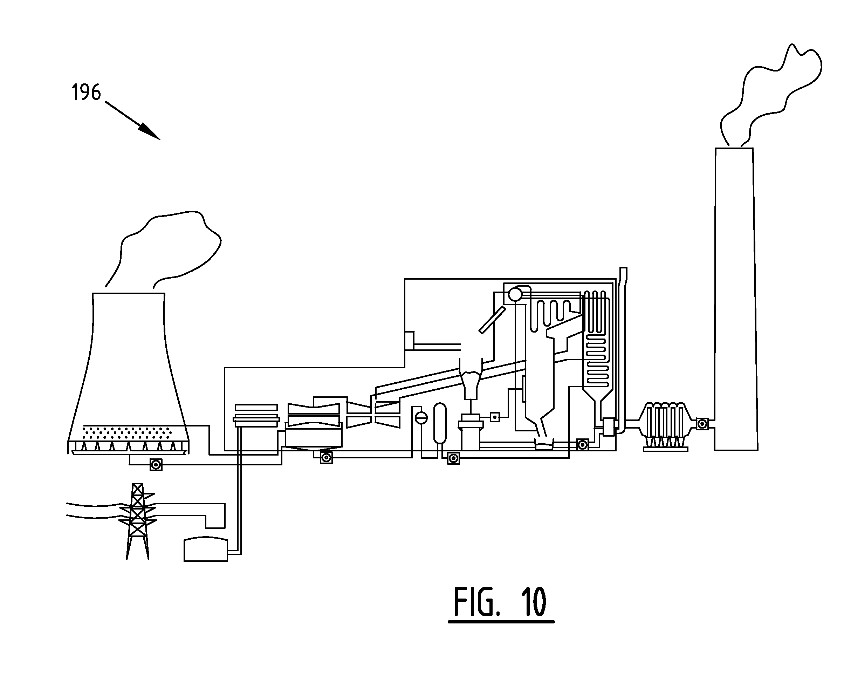

In an alternative system 196 according to the invention the supercritical desalination is incorporated in the cycle of a power plant (figure 10). The energy generated in the operation of the power plant is used to energize the entire SCD operation. Often a power plant uses a closed system wherein water is heated to steam for driving a turbine to generate energy. Next, the water is re-used. According to the invention a power plant utilizes an open system wherein an incoming fluid, like water, is heated to supercritical conditions. The different compounds, like salt fractions, are removed from the water and the water/steam is used for driving the turbines. Thereafter the water can be used as drinking water as for example the salt fractions have already been removed from the water. New (sea) water is used for generating energy. An advantage is of this system is that no additional pretreatment steps for the fluid for the power plant are required. Furthermore, production of drinking water can be combined with generation of energy in a power plant. A further advantage is that most of the required equipment is already available in existing power plants. In fact, the only major requirement would be adding a separation step for the removal of the inorganic compounds, like the salt fractions. As an example, a 550 MW power plant uses about 1600 ton steam per hour. Such power plant could be producing, besides energy, about 1600 m³/hour drinking water.

The present invention is by no means limited to the above described preferred embodiments thereof. The rights sought are defined by the following claims, within the scope of which many modifications can be envisaged.

## Claims

1. Method for supercritical removal of an inorganic compound, comprising the steps of:
- bringing a fluid comprising more than one inorganic fractions at supercritical conditions, wherein the fluid comprises different salt fractions as inorganic fraction;
- separating different salt fractions in the fluid through the decrease in solubility of salt fractions at supercritical conditions,
wherein the separation step is divided in different sub-steps to separate different fractions at different supercritical conditions in separate sub-steps, comprising:
- operating a first unit (144) at a temperature of 650 K and a pressure of 25 MPa;
- sending one output flow of the first unit to a second unit (146) performing a second step (2A) at conditions of 700 K and 25 MPa having output flows of water and a salt fraction of NaCl;
- sending another output flow of the first unit to another unit (148) performing a step (2B) at conditions of 640 K and 25 MPa and having two main output flows comprising mainly Na₂SO₄ and Na₂CO₃ respectively;
- cooling and/or depressurizing the fluid; and
- removing the separated fractions.

2. Method according to claim 1, wherein the fluid is sea water and/or waste water.

3. Method according to claim 1 or 2, wherein the fluid is brought at supercritical conditions with a pressure above 221 bar and a temperature above 374°C such that the relative dielectrical constant drops.

4. Method according to claim 1 or 2, wherein the pressure of the fluid at the separation step is above 221 bar to ensure a chloride concentration below 200 ppm.

5. Method according to any of claim 1-4, wherein pre-treating the fluid in a reverse osmosis process step, wherein the concentrated brine output flow is used as input flow for the separating step.

6. Method according to any of claims 1-5, , wherein the fluid is pretreated in a Multi-Stage-Flash distillation unit.

7. Method according to any of claims 1-6, wherein energy is recovered from the fluid after the separation step.

8. Method according to claim 7, wherein the energy is recovered using at least one of a turbocharger, Pelton wheel and a work exchanger.

9. Method according to any of claims 1-8, wherein the fluid is water and wherein different salt fractions are removed from the water and the water/steam is used for driving turbines of the power plant.

10. Method according to any of claims 1-9, wherein energy for bringing the fluid at supercritical conditions is provided by a fuel cell or a power plant.

## Patentansprüche

1. Verfahren zur überkritischen Entfernung einer anorganischen Verbindung, das die folgenden Schritte aufweist:
- ein Fluid, das mehr als einen anorganischen Anteil aufweist, auf überkritische Bedingungen bringen, wobei das Fluid verschiedene Salzanteile als anorganischen Anteil aufweist;
- Trennen verschiedener Salzanteile in dem Fluid durch die Verringerung der Löslichkeit von Salzanteilen bei überkritischen Bedingungen,
wobei der Trennschritt in verschiedene Teilschritte unterteilt wird, um verschiedene Anteile bei verschiedenen überkritischen Bedingungen in getrennten Teilschritten zu trennen, welche aufweisen:
- Betreiben einer ersten Einheit (144) bei einer Temperatur von 650 K und einem Druck von 25 MPa;
- Befördern eines Ausgangsflusses der ersten Einheit zu einer zweiten Einheit (146), die einen zweiten Schritt (2A) bei Bedingungen von 700 K und 25 MPa durchführt, die Ausgangsflüsse aus Wasser und einem Salzanteil von NaCl hat;
- Befördern eines anderen Ausgangsflusses der ersten Einheit zu einer anderen Einheit (148), die einen Schritt (2B) bei Bedingungen von 640 K und 25 MPa durchführt und zwei Hauptausgangsflüsse hat, die jeweils hauptsächlich Na₂SO₄ und Na₂CO₃ aufweisen;
- Kühlen und/oder Verringern des Drucks des Fluids; und
- Entfernen der getrennten Anteile.

2. Verfahren nach Anspruch 1, wobei das Fluid Meerwasser und/oder Abwasser ist.

3. Verfahren nach Anspruch 1 oder 2, wobei das Fluid auf überkritische Bedingungen mit einem Druck über 221 Bar und einer Temperatur über 374°C gebracht wird, so dass die relative dielektrische Kontante fällt.

4. Verfahren kann Anspruch 1 oder 2, wobei der Druck des Fluids in dem Trennschritt über 221 Bar ist, um eine Chloridkonzentration unter 200 ppm sicherzustellen.

5. Verfahren nach einem der Ansprüche 1-4, wobei das Fluid in einem Umkehrosmosesverfahrensschritt vorbehandelt wird, wobei der konzentrierte Salzlösungsausgangsfluss als Eingangsfluss für den Trennschritt verwendet wird.

6. Verfahren nach einem der Ansprüche 1 - 5, wobei das Fluid in einer mehrstufigen Entspannungsverdampfungseinheit vorbehandelt wird.

7. Verfahren nach einem der Ansprüche 1-6, wobei nach dem Trennschritt aus dem Fluid Energie rückgewonnen wird.

8. Verfahren nach Anspruch 7, wobei die Energie unter Verwendung eines Turboladers und/oder eines Peltonrads und/oder eines Arbeitsaustauschers rückgewonnen wird.

9. Verfahren nach einem der Ansprüche 1-8, wobei das Fluid Wasser ist und wobei verschiedene Salzanteile aus dem Wasser entfernt werden und das Wasser/der Wasserdampf verwendet wird, um Turbinen der Energieerzeugungsanlage anzutreiben.

10. Verfahren nach einem der Ansprüche 1-9, wobei Energie, um das Fluid auf überkritische Bedingungen zu bringen, von einer Brennstoffzelle oder einer Energieerzeugungsanlage bereitgestellt wird.

## Revendications

1. Procédé d'élimination en conditions supercritiques d'un composé inorganique, comprenant les étapes consistant à :
- porter un fluide comprenant plus d'une fraction inorganique à des conditions supercritiques, le fluide comprenant différentes fractions salines comme des fractions inorganiques ;
- séparer les différentes fractions salines dans le fluide par le biais de la diminution de la solubilité des fractions salines dans des conditions supercritiques,
dans lequel l'étape de séparation est divisée en différentes sous-étapes pour séparer les différentes fractions dans différentes conditions supercritiques dans des sous-étapes séparées, comprenant les étapes consistant à :
- utiliser une première unité (144) à une température de 650 K et à une pression de 25 MPa ;
- envoyer un premier flux sortant de la première unité à une seconde unité (146) réalisant une seconde étape (2A) à des conditions de 700 K et 25 MPa ayant comme flux sortants de l'eau et une fraction saline de NaCl ;
- envoyer un autre flux sortant de la première unité à une autre unité (148) réalisant une étape (2B) à des conditions de 640 K et 25 MPa et ayant deux flux principaux sortants comprenant principalement du Na₂SO₄ et du Na₂CO₃ respectivement ;
- refroidir le fluide et/ou diminuer la pression de celui-ci ; et
- éliminer les fractions séparées.

2. Procédé selon la revendication 1, dans lequel le fluide est de l'eau de mer et/ou des eaux usées.

3. Procédé selon la revendication 1 ou 2, dans lequel le fluide est porté à des conditions supercritiques avec une pression supérieure à 221 bars et à une température supérieure à 374 °C de manière à ce que la constante diélectrique relative chute.

4. Procédé selon la revendication 1 ou 2, dans lequel la pression du fluide à l'étape de séparation est supérieure à 221 bars afin de garantir une concentration en chlorures inférieure à 200 ppm.

5. Procédé selon l'une quelconque des revendications 1 à 4, dans lequel le fluide est prétraité dans une étape de traitement par osmose inverse, le flux sortant de saumure concentrée étant utilisé comme flux entrant pour l'étape de séparation.

6. Procédé selon l'une quelconque des revendications 1 à 5, dans lequel le fluide est prétraité dans une unité de distillation éclair par détentes successives.

7. Procédé selon l'une quelconque des revendications 1 à 6, dans lequel l'énergie est récupérée du fluide après l'étape de séparation.

8. Procédé selon la revendication 7, dans lequel l'énergie est récupérée à l'aide d'au moins l'un d'un turbocompresseur, d'une turbine Pelton et d'un échangeur de travail.

9. Procédé selon l'une quelconque des revendications 1 à 8, dans lequel le fluide est de l'eau et dans lequel les différentes fractions salines sont éliminées de l'eau et l'eau/vapeur est utilisé(e) pour entraîner des turbines de la centrale électrique.

10. Procédé selon l'une quelconque des revendications 1 à 9, dans lequel l'énergie servant à porter le fluide à des conditions supercritiques est fournie par une pile à combustible ou une centrale électrique.
